# EUROPEAN PATENT APPLICATION

(11) **EP 3 062 281 A1**
(43) Date of publication of application: **31.08.2016**
(21) Application number: 16155418.3
(22) Date of filing: 12.02.2016
(51) Int. Cl.: G06Q 30/06, G06T 19/00

(54) **VIRTUAL SHOPPING SYSTEM AND METHOD UTILIZING VIRTUAL REALITY AND AUGMENTED REALITY TECHNOLOGY**

(30) Priority: 26.02.2015 TW 104106215
(71) Applicant: Staging Design Inc., New Taipei City 242 (TW)
(72) Inventor: LEE, Chung-Pin, 242 New Taipei City (TW)
(74) Representative: Viering, Jentschura & Partner mbB Patent- und Rechtsanwälte

(57) **Abstract**

The disclosure is related to virtual shopping system and method utilizing virtual reality and augmented reality technology. In an embodiment, a user firstly selects one of the products exhibited on an online shopping website. The system renders a virtual reality browsing environment for the user to check the details of the product according to product ID. The system transmits the images relating the selected product, and allows the user uses an electronic display device (21) to display the virtual reality images. In response to the instructions made by the electronic display device (21), the system outputs the corresponding images, including the content displayed as switching to an augmented reality mode. The system combines the data of product using the augmented reality images with the virtual reality images, and the merged content is displayed on a display of the electronic display device (21).

## Description

### BACKGROUND OF THE INVENTION

### 1. Field of the Invention

The present invention is generally a virtual shopping system and method, in particular to an online shopping system utilizing a virtual reality and an augmented reality technology and a method thereof.

### 2. Description of Related Art

Consumer may shop in a tangible store or using an online shopping website. Rather than displayed on the online shopping webpage, the tangible store can exhibit the real goods. If the exhibited goods are the articles of furniture or furnishings, the shopkeeper may furnish and decorate the goods using specific design of the store space so as to attract the consumer's eyes.

The well-developed electronic commerce gradually brings influence on the consumer's shopping behavior. Many commodities are on sale when they are exhibited on the online shopping website. The online shopping website allows consumers to click one of the exhibited commodities to enter the shopping website. When the consumer clicks a specific shopping website for gaining the commodity's information, an online payment means are provided to perform payment.

The conventional e-commerce shopping platform usually provides the plain commodity information and/or introduces the commodity with multiple-angular image. The consumer may decide whether or not to buy the commodity based on the plain information. Actually, the consumer cannot easily look and feel the commodity based on the plain information until the commodity is handed on to the consumer, especially to the articles of furnishing that require fitting with the surrounding articles and decorations. It may meet complex procedure of returning if the consumer dissatisfies the article.

When the transaction is regarding to selling a house, the potential buyer needs the real-estate agency to guide him to view the house. Rather than the consumer can be guided by the agency to actually navigate the existing house or used house, the consumer conventionally views the pre-sale house using its plain picture or model.

### SUMMARY OF THE INVENTION

The disclosure is related to a virtual shopping system and a method utilizing both a virtual reality (VR) technology and an augmented reality (AR) technology. In one aspect of the present invention, the system provide browsing function under a virtual reality mode or an augmented reality mode when the user browses the articles exhibited on the online shopping website. The website allows the user to gain various information of the articles. The information may include the virtual images showing a place or at home where the article is placed. The system also utilizes AR technology to show the information of article to be sold.

In one embodiment of the present invention, the method of virtual shopping is based on the VR technology and AR technology. In the method, when a user selects an article, identification data associated with the article can be retrieved. The system receives the identification data instantly. Next, a VR mode or an AR mode is activated in an electronic display device. The electronic display device is such as a virtual reality display worn by the user. The virtual reality display is exemplarily a head-mounted display (HMD). The images associated to the selected article are then transmitted to the user-end electronic display device. The images are displayed in the electronic display device under the VR mode or the AR mode. By which, the user views the article under the VR mode or the AR mode, and operates the display therein. The system outputs the images in response to the operating instructions generated by the electronic display device.

Furthermore, when an article is selected, the system allows the user to choose browsing information of the article under the VR mode or the AR mode. For example, the article is exhibited in a specific occasion using virtual reality images, or in the AR-enabled environment where the user stays.

In one further aspect of the present invention, as in operation of the virtual reality mode, the system provides the AR images corresponding to the article according to the operating instruction. Accordingly, an AR mode is initiated. The information of the article is then combined with the VR images. The electronic display device displays the combined images using its display.

In the virtual shopping system utilizing the VR technology and the AR technology, the main components of the virtual shopping system are such as a data processing unit used to process internal signals of the system, an instruction processing unit used to receive and convert operating instructions generated by the electronic display device, an image processing unit used to output image signals to the electronic display device, and a commodity serving unit used to provide commodity information and selection. A VR engine is also included in the system for processing and generating VR images; and an AR engine is also included in the system for processing and generating AR images.

### BRIEF DESCRIPTION OF THE DRAWINGS

Fig. 1 shows a schematic diagram depicting a network framework of the virtual shopping system in one embodiment of the present invention;
Fig. 2 shows a functional block diagram of the virtual shopping system in one embodiment of the present invention;
Fig. 3 shows a schematic diagram depicting a graphic user interface for displaying commodity information in the virtual shopping system according to one embodiment of the present invention;
Fig. 4 shows another schematic diagram depicting a graphic user interface for displaying the commodity information in the virtual shopping system of the present invention;
Fig. 5 schematically shows the VR images in the virtual shopping system in one embodiment of the present invention;
Fig. 6 shows a flow chart describing the method for virtual shopping utilizing the VR technology and the AR technology according to one of the embodiments of the present invention;
Fig. 7 shows another flow chart depicting the method for virtual shopping system method in another one embodiment of the present invention;
Fig. 8 shows a flow chart depicting the method for virtual shopping system method in one further embodiment of the present invention.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

The disclosure in accordance with the present invention is related to a virtual shopping system and a method utilizing a virtual reality (VR) technology and an augmented reality (AR) technology. The VR technology is able to render a software-enabled three-dimensional image. The three-dimensional image can be displayed using a specific carrier. In an exemplary example, an electronic display device is such as a head-mounted display that acts as a display capable of displaying VR image and AR image. The head-mounted display allows the user to look around the environment in an immersive mode. Further, the system in the disclosure is provided for the user to switch to a VR mode or an AR mode. The VR mode allows the user to browse the commodities in a VR simulated scene. The user can browse the commodities combined in a real circumstance where the user stays under the AR mode.

In general, a software program is required to be adapted to browsing a VR environment. The software program is such as a web-based interface, or proprietary software that is executed in a user computer. The user can browse the commodities and/or operate an object in a virtual reality scene.

According to one of the embodiments of the present invention, the system also utilizes an AR technology. The augmented reality technology can be implemented in a virtual navigation device that allows a user to operate so as to instantly compute position and orientation of the device based on the user's instructions. In this AR mode, in response to the user's instructions, the multimedia content such as video, audio and/or text can be added into the VR images according to the virtual navigation device's position and orientation/angle by instant computation. Therefore the AR scene is crated since one of the objectives of the augmented reality technology is to render an interactive circumstance by applying the virtual object/article to a real scene. In accordance with the present invention, a user interface is provided in VR mode that allows showing messages within the user interface for rendering further information for interested object. In one embodiment, within the virtual navigation device, the video, audio, and/or text description can be added into the VR scene using AR technology.

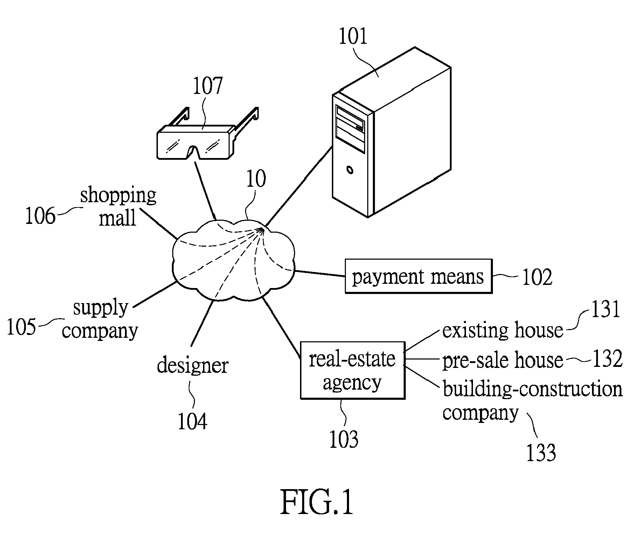

Reference is made to Fig. 1 describing a system established over a network framework. The system includes a system server 101 that acts as a server implementing a shopping platform according to one aspect of the invention. The system server 101 may also provide service to render the VR images and AR images. The system server 101 connects with the terminal devices over a network 10. According to one of the embodiments of the present invention, the system server 101 can connect with external sources such as the company rendering a payment means 102. The company is such as a financial institution, telecommunication company, or third-party payment company that provides a payment approach for online shopping service.

The system server 101 can be in communication with one or more designers 104 who design the commodities or objects, one or more supply companies 105 which delivers the merchandises, services or specific objects, and one or more shopping malls for exhibiting the articles over the network 10. Further, the system can be cooperated with the real-estate agency 103. The real-estate agency 103 can sell the houses, including the existing houses 131 and/or pre-sale houses 132, through the virtual shopping system according to one of the embodiments of the present invention. The services made by the real-estate agency 103 can cover the building-construction company 133 that renders the virtual objects concerning the building constructions. The virtual objects are provided for the virtual shopping system.

The system server 101 instructs the terminal user to enter the virtual shopping world utilizing a specific user device 107. The user device 107 can be a computer system capable of processing network data over the network 10. The user device 107 can also be the user's wearable electronic display device, such as a head-mounted display. The electronic display device itself is able to process the data delivered over the network 10.

The real-estate agency 103 may use the virtual shopping system utilizing the VR technology and the AR technology, and its method. For example, the user can make an order of leasing or buying a house object through an online shopping website. The object can be a pre-sale house 132 under construction by a building-construction company 133, or an existing house 131. In the meantime, the system can initiate a virtual reality mode allowing the system server 101 to deliver the video, audio, and/or text to the terminal device. The user can wear the electronic display device entering the VR scene to browse the objects. The AR technology is able to show the messages related to the browsing objects in the VR scene.

For example, when the user selects one article on the online shopping website, an introduction to the article includes the designer 104 who designs this article, the supply company 105 that provides the article, and also the shopping mall 106 selling the article. Additionally, the system serves the electronic display device operated by the user to look at the article in a VR mode, or show the article in a specific occasion using VR technology. Furthermore, the AR images can be added to show the variety of the article.

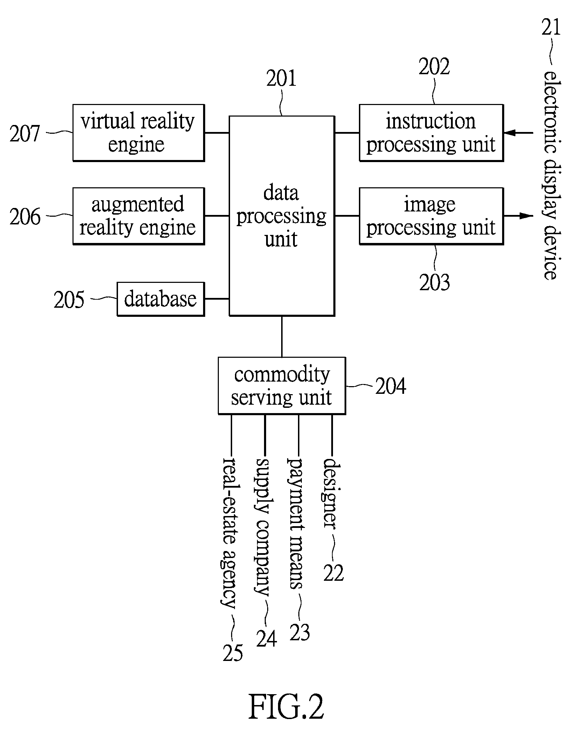

Reference next is made to Fig. 2 showing a functional block diagram exemplarily describing the functions made by the virtual shopping system utilizing the VR technology and AR technology.

The virtual shopping system includes a data processing unit 201 used to process the data inside the system. The data processing unit 201 is used to process webpage data, VR image signals, and AV image signals. Other function units are electrically connected with the data processing unit 201.

The virtual shopping system receives the operating instructions from an external device manipulated by the user. The instructions are such as instruction for selecting one of the commodities, e.g. clicking the item, instruction for browsing information of the commodity, instruction for initiating VR mode or AR mode, instruction for processing gestures made by the external device or the electronic display device. The system includes an instruction processing unit 202 for performing the instructions. The instruction processing unit 202 also receives the operating instructions from the external device, e.g. the electronic display device 21, and converts the instructions to operations. The external device can be a generic purpose computer system, such as a desktop computer, laptop computer, or the various portable electronic devices. The external device can also be the wearable electronic display device that is such as a head-mounted display provided for the user to see the VR images and/or the AR images.

The virtual shopping system outputs image signals to the external device via a communication interface of the system. The system has some essential circuits for processing the output signals, for example, an image processing unit 203 is configured to be the signal processing circuit. Through the image processing unit 203, the VR image signals and/or the AR image signals are outputted to the external device, for example the external device is used to display the VR images combined with AR images in the device (21).

The virtual shopping system has a commodity serving unit 204 configured to provide commodity information and selection process. In one embodiment, the commodity serving unit 204 can be a software-implemented web server for displaying the articles through a webpage. The other proprietary software installed in the external device can also be used to show the articles provided by the system. The commodity serving unit 204 is configured to display the articles on a page derived by, but not limited to, any one of the above-mentioned methods. The information of the things to be sold includes a supply company, and its payment means. The VR mode or the AR mode is used to browse the content of the article. In an exemplary case, the user operates a software program in a handheld device to connect with the virtual shopping system, or use a web browser to conduct the communication with the system. Then the commodity serving unit 204 in the system renders the services of article searching, browsing, and selection.

It is noted that the virtual shopping system is able to provide information of various articles, including the correlated article's designer 22, supply company 24, and real-estate agency 25. The information is registered and maintained in the system over network. The commodity serving unit 204 initiates a web interface or a software-implemented interface for the users. The commodity serving unit 204 is provided for the system to render many kinds of payment means 23, in which one of the payment means 23 is selected by the user to go on the online shopping.

The virtual shopping system provides the user the VR mode or the AR mode to browse the commodities. The system includes a virtual reality engine 207 to process and to generate the VR images. The VR images associated to the commodities are beforehand stored in the system. The system also includes an augmented reality engine 206 for processing and generating the AR images that are essentially related to the commodities. The data processing unit 201 in the system outputs the content according to the operating instructions generated by the external device. The output is such as the VR images generated by the VR engine 207 in the VR mode of the external device. Also, the external device outputs the AR images by the AR engine 206 in the AR mode of the external device.

The system has a database 205 that is used to record the data of the VR images and AR images that are associated to the commodities.

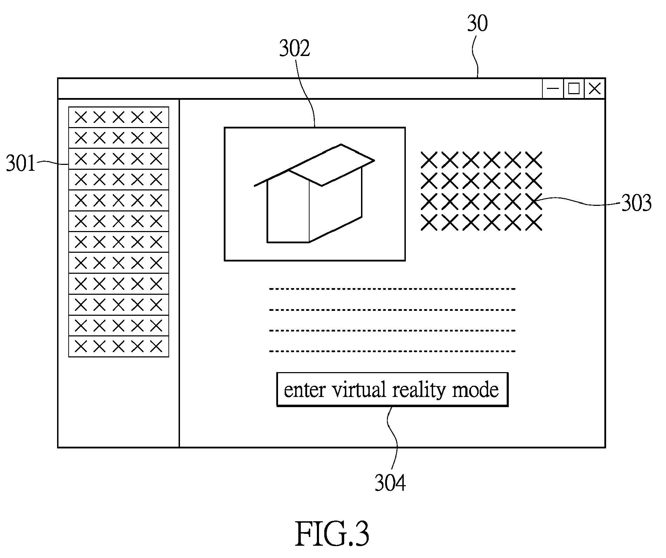

The virtual shopping system exemplarily renders a graphic interface for displaying the commodities. In Fig. 3, a web-based commodity display page 30 is shown in a web browser. A lateral column is provided in the web browser for displaying a commodity menu 301 of the system. The lateral column also includes a commodity icon 302 and a commodity description 303 of the commodity selected by the user. The column can further include the function allowing the user to click a virtual reality mode menu 304, and notify the system that the virtual reality mode is initiated.

In one of the embodiments of the virtual shopping system, the user at the terminal uses a computer to logon the online shopping website. The user browses the commodities at the online shopping website. When the user chooses one of the commodities, an ID with respect to the commodity is transmitted to the server. The server therefore gains the identification data associated to the chosen commodity and allows the user to activate the VR mode using the virtual reality mode menu 304. In one example, the online shopping website generates signals to activate the VR mode when the user chooses to operate the virtual reality through the commodity display page 30. After that, the system will ask the user to prepare an external device as to communicate with the system.

The external device is such as a computer system that connects with the online shopping website providing commodity information and allowing the user to make selection. The computer system is able to display VR images and AR images. The computer system is such as a head-mounted display for displaying the VR images and the AR images. The system uses the identification data registered in the system to recognize the external device, and accordingly transmits the VR images or the AR images to the external device.

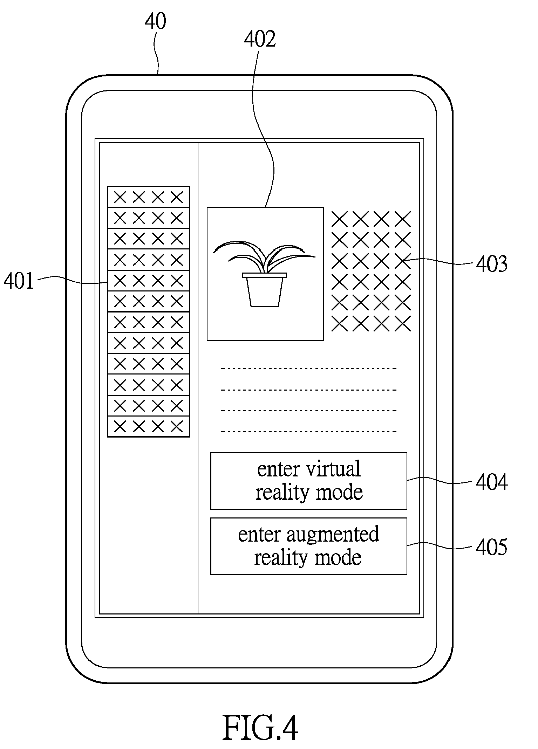

Fig. 4 schematically shows a graphic interface used to display commodity information in the virtual shopping system according to one of the embodiments of the present invention.

The exemplary example shows a commodity display screen 40 rendered by a handheld device. The commodity display screen 40 has a commodity menu 401 provided for the user to select commodity through a commodity icon 402 associated to a specific commodity, and its commodity description 403. In the present invention, a virtual reality mode switching option 404 and an augmented reality mode switching option 405 are provided through the graphic interface.

The commodity display screen 40 displays the information with respect to a specific commodity, including the virtual options when the user selects one of the commodities. The VR mode is activated in the virtual shopping system when the user clicks the virtual reality mode switching option 404 so as to transmit the VR images of the commodities to the electronic display device. It this VR mode, the user can virtually browse the commodities using the electronic display device. The virtual shopping system renders three-dimensional images for the commodities, or a virtual scene to display the commodities. The system allows the user more clearly to look at the commodities through the virtual reality scene so as to determine whether or not he gives an order to a specific commodity.

More, the user can select the augmented reality mode switching option 405 to activate the AR mode. The virtual images of the commodities can be combined with a real scene taken by a camera device of the electronic display device. The real scene is the environment where the user stays. In an example, when the user clicks a table at the shopping website, the system loads images of the table according to the identification data thereto under the AR mode. Then the electronic display device is used to capture the real scene such as a living room where the table is projected. The image of the table can be combined with the image of the living room in this AR mode. This AR scene allows the user to determine whether or not it is a preferred article for the user to buy.

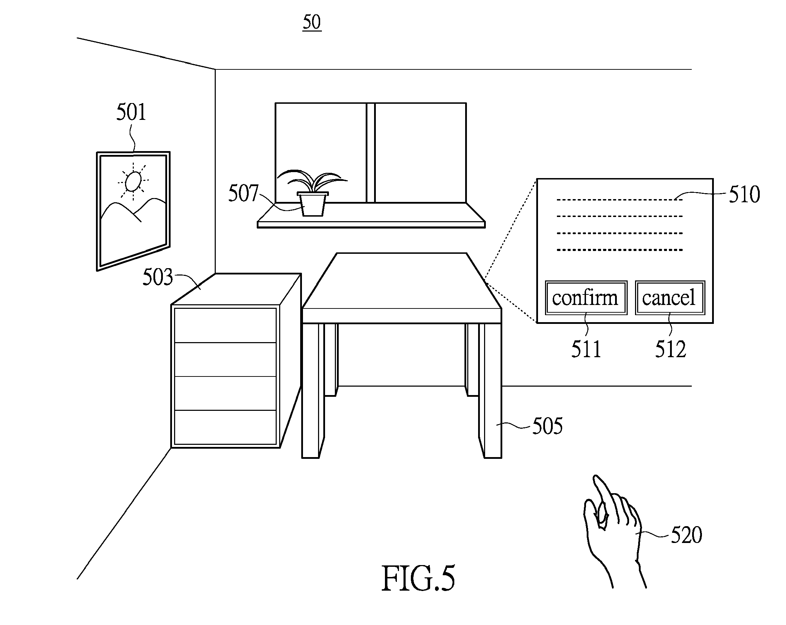

Reference is made to Fig. 5 schematically describing the virtual reality scene in the virtual shopping system.

The present embodiment shows a commodity space 50 revealed through a VR scene. The commodity space 50 is such as a living room decorated with some materials. The house is also a selectable and rentable object. The decorations are shown in the diagram using the VR technology. Several objects are exemplarily described in the scene and are labeled as the commodity objects 501, 503, 505, and 507. The user can utilize the electronic display device to browse the commodities in the virtual reality mode. In this VR space, the user can manipulate an indication symbol 520, e.g. the hand symbol, to move in the commodity space 50 by a gesture operation. The user can move the indication symbol 520 to an interested object, for example the commodity 505, so as to generate an operating instruction for the system. The system accordingly activates an auxiliary browse mode in response to the operating instruction. For example, a floating window can be created at a side of the commodity 505 for revealing a commodity introduction 510. Furthermore, the augmented reality mode can also be initiated at a specific occasion. The user can experience the movement in this commodity space 50 in the AR mode. The AR mode allows the user can look and feel the decorations in the real scene, for example the user can try to move the commodity 505 at a favorite position in the living room.

In the meantime, the commodity introduction 510 can be shown as a text description, a picture, or a vocal description in combination of the VR mode and the AR mode. The mentioned auxiliary browse mode is such as a viewing mode in combination of the VR mode and the AR mode that allows the shopping system to provide a buying option 511 and a cancellation option 512. All the operating instructions may be, but not limited to, generated through the graphic interface such as rendering the graphic indication symbol 520. It is noted that a voice-based control scheme can also be used in the aspect of the present invention.

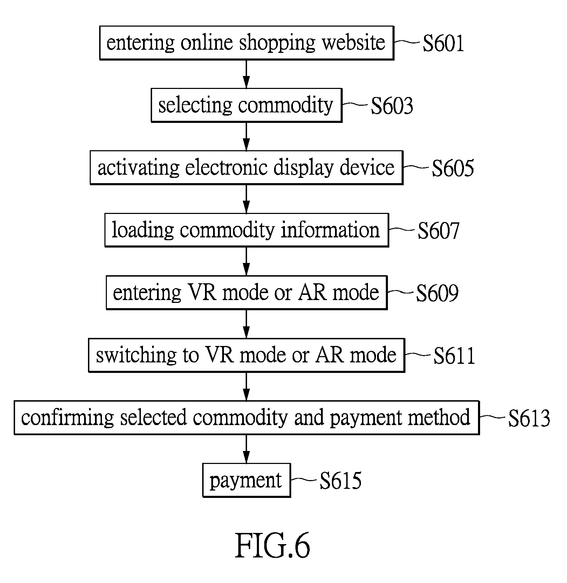

Reference is next made to Fig. 6 showing a flow chart used to describe the virtual shopping method utilizing VR and AR technologies.

In the method, the beginning step S601 describes the user using a computer system to enter an online shopping website. In step S603, the user may select one of the commodities displayed in an exhibition page. Identification data associated to the selected commodity is then produced, and accordingly the associated supply company and a payment means are also shown in the page. After that, the system receives this identification data, such as in step S605. The system then calls activating an electronic display device by a specific signaling method. The electronic display device is activated to download the associated data according to the identification data, such as in step S607.

The commodity display page allows the user to browse commodities in a VR mode or in an AR mode. After one of the commodities is selected, the signals related to this selection made by the VR mode or the AR mode are generated. In step S609, the system enters the virtual reality mode or the augmented reality mode, the associated VR images or AR images are also downloaded to the electronic display device. In step S611, according to the user's operation, the virtual reality mode and the augmented reality mode can be mutually switched.

In an aspect of the present invention, the system can first enter the VR mode allowing the user to see the condition of the commodity in a VR scene; next enter the AR mode for showing the further information of the commodity. It is noted that the identification data associated to the commodity is a main reference for the system to output information, for example the VR or AR images. Furthermore, the identification data is the reference for the system to prompt the user to make a purchase order including confirming the price and the commodity specification, or even leaving the page. In one another aspect of the present invention, the system can first enter the AR mode allowing the user to operate the electronic display device combining the commodity images to a real scene based on the identification data.

In the aforementioned procedure, the system can continuously output the image data in response to operating instructions generated by the electronic display device, such as in step S613. When the user has selected one or more of the commodities, including an order of payment, the shopping procedure is accomplished after the identity authentication and payment have been completed, as shown in step S615.

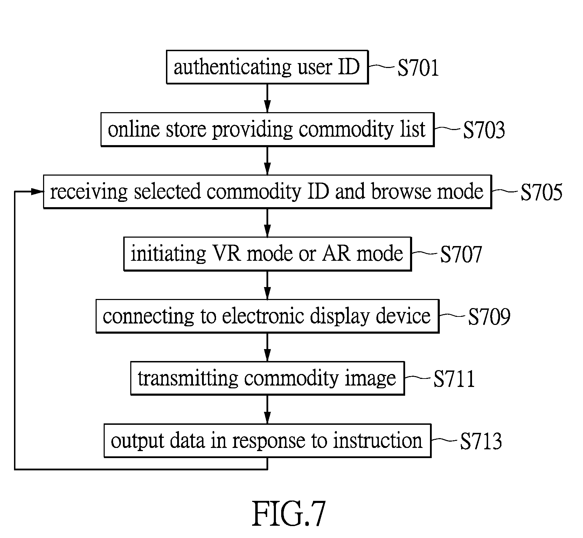

Fig. 7 shows a flow chart describing the virtual shopping method utilizing the VR and AR technologies according to one embodiment of the present invention.

In the beginning, as in step S701, the system authenticates the user who logs on the online shopping website. In step S703, the online shopping website initiates a user interface for the user to browse commodities. In step S705, the system receives identification data of commodity responsive to the signal of selection made by the user, and system receives the instruction of selection of one of the browsing modes. Next in step S707, the system activates entering the VR mode or the AR mode in response to the user's selection. The system establishes a communication line with the electronic display device configured to display VR or AR images, such as in step S709. The system accordingly transmits the image data associated to the selected commodity to the terminal device, e.g. the electronic display device, shown as in step S711.

Thus, the user can operate the device and browse the commodities in the VR mode or AR mode. The operating instructions are generated in the terminal device and transmitted to the system. In step S713, the system outputs the VR images and/or AR images associated to the commodity according to the operating instruction. Under the VR mode, as described in step S705, the system continuously renders the service allowing the user to select and browse the commodities. Continuously in the VR, or switched to the AR mode, the system also prompts the buying and payment information to the user for accomplishing the shopping procedure.

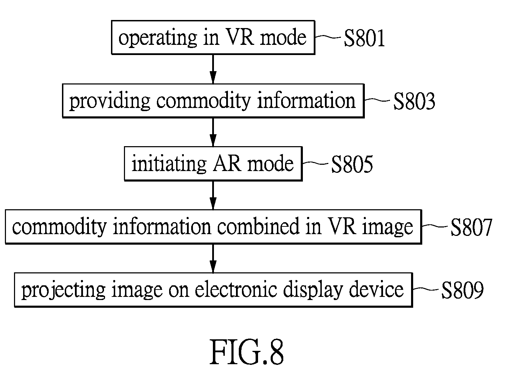

One further embodiment in accordance with the present invention is described in the flow chart shown in Fig. 8 depicting the image data in AR mode combined in VR mode.

In step S801, the system first enters the VR mode. In step S803, the system renders the data associated to commodities in response to the operating instruction. The details related to the commodity can be shown in a specific way. For example, a floating window can be created at the side of the related commodity for displaying the corresponding information. In this aspect, the AR images can also be used to display the information in a specific occasion. The system therefore activates the AR mode, such as in step S805. The information corresponding to the commodity integrated in a real space can be combined in the VR images, such as in step S807. The details shown on the floating window can be simultaneously displayed using the AR technology, and the final images are projected to the electronic display device, such as in step S809.

In an exemplary example, when the user desires to select one house object through a shopping platform in agency, the system renders VR images for the user to make the selection. The system instantly requests for delivering the VR images to the electronic display device allowing the user to operate browsing the house object. Responsive to any request, the system can be switched to entering AR mode from the initial VR mode. The AR images are therefore generated when the user clicks a specific object in the house. In the meantime, the system enters an auxiliary browsing mode as integrating the AR images in the VR scene. The AR images are related to the browsing content made by picture, voice or text description. The final picture is then displayed in a display of the electronic display device.

To sum up, the present invention is related to a virtual shopping method utilizing virtual reality technology or in combination with augmented reality technology that allows the user to browse the commodities in a VR environment. The content corresponding to the commodities can be in advance produced in the system. The content is particularly shown to the user in VR and/or AR technologies. The shopping procedure is finally accomplished by a selected payment means.

It is intended that the specification and depicted embodiment be considered exemplary only, with a true scope of the invention being determined by the broad meaning of the following claims.

## Claims

1. A virtual shopping method utilizing a virtual reality technology and an augmented reality technology, comprising:
receiving identification data of a commodity;
initiating a virtual reality mode or an augmented reality mode in an electronic display device (21);
transmitting image data associated to the commodity for displaying the image in the electronic display device (21) when switching to the virtual reality mode or the augmented reality mode; and
outputting image data in response to operating instruction generated by the electronic display device (21).

2. The method as recited in claim 1, wherein, when the electronic display device (21) operates in the virtual reality mode, an augmented reality image associated with the commodity is provided in response to the operating instruction and simultaneously an auxiliary browse mode is initiated; a floating window is provided to display the commodity information combined in the virtual reality image on a display screen of the electronic display device (21).

3. The method as recited in claim 1, further comprising providing an online shopping website; the identification data of the commodity is generated when the commodity is selected in the online shopping website.

4. The method as recited in claim 3, wherein the online shopping website initiates a page for commodity exhibition including every commodity's supply company (105) and an associated payment means, and also activates the virtual reality mode or the augmented reality mode to create options of browsing commodities.

5. The method as recited in claim 4, wherein, when the electronic display device (21) operates in the virtual reality mode, an augmented reality image associated with the commodity is provided in response to the operating instruction and simultaneously an auxiliary browse mode is initiated; a floating window is provided to display the commodity information combined in the virtual reality image on a display screen of the electronic display device (21).

6. The method as recited in claim 4, wherein, when the commodity is selected, signals of browsing the commodity information using the virtual reality mode or the augmented reality mode are generated.

7. The method as recited in claim 6, wherein, when the electronic display device (21) operates in the virtual reality mode, an augmented reality image associated with the commodity is provided in response to the operating instruction and simultaneously an auxiliary browse mode is initiated; a floating window is provided to display the commodity information combined in the virtual reality image on a display screen of the electronic display device (21).

8. The method as recited in claim 7, wherein, a virtualized indication symbol is created as entering the virtual reality mode or the augmented reality mode, and the operating instruction is generated as clicking one of the commodities using the indication symbol.

9. A virtual shopping system using a virtual reality technology or an augmented reality technology, comprising:
a data processing unit (201), processing data in the virtual shopping system;
an instruction processing unit (202), electrically connected with the data processing unit (201), used to convert received operating instruction from an external device;
an image processing unit (203), electrically connected with the data processing unit (201), used to output image signals to the external device;
a commodity serving unit (204), electrically connected with the data processing unit (201), used to provide commodity information and options;
a virtual reality engine (207), electrically connected with the data processing unit (201), used to generate virtual reality images after processing virtual reality image signals;
an augmented reality engine (206), electrically connected with the data processing unit (201), used to generate augmented reality images after processing augmented reality image signals;
wherein, in response to the operating instruction generated by the external device, the data processing unit (201) outputs corresponding data, including the virtual reality images processed by the virtual reality engine under a virtual reality mode, and the augmented reality images processed by the augmented reality engine under an augmented reality mode.

10. The system as recited in claim 9, wherein the external device is a computer system connected to on online shopping website providing commodity information and selection.

11. The system as recited in claim 10, further comprising a database (205) that stores the virtual reality images and the augmented reality images associated to identification data with respect to every commodity.

12. The system as recited in claim 9, wherein the external device is an electronic display device (21) having a display screen for displaying the virtual reality images and/or the augmented reality images.

13. The system as recited in claim 12, further comprising a database (205) that stores the virtual reality images and the augmented reality images associated to identification data with respect to every commodity.
